# EUROPEAN PATENT APPLICATION

(11) **EP 2 891 874 A2**
(43) Date of publication of application: **08.07.2015**
(21) Application number: 14461597.8
(22) Date of filing: 16.12.2014
(51) Int. Cl.: G01M 11/00

(54) **A method and a system for measuring the nonlinearity coefficient of an optical fiber**

(30) Priority: 07.01.2014 PL 40679514
(71) Applicant: Orange Polska S.A., 02-326 Warszawa (PL)
(72) Inventor: Perlicki, Krzysztof, 05-820 Piastów (PL)
(74) Representative: Piotrowicz, Alicja

(57) **Abstract**

A length of a tested optical fiber (SWT) of an appropriately selected length (L_{SWT}) is tested by means of light pulses emitted by a semiconductor laser (LP), whose activity is controlled by a control unit (US). States of parameters of the light signals in a ring resonator (ŚRP) are determined by polarisation controllers (KP1, KP2). In a measuring unit (MP) numerical values of dispersion and attenuation of the tested optical fiber length (SWT) are measured. On the basis of the length, determined in a computing unit (MO), of the Archimedean spiral presented on an oscilloscope (OS) screen, a numerical value of the nonlinearity coefficient of the tested optical fiber length (SWT) is computed.

## Description

The invention relates to a method of measuring the nonlinearity coefficient of an optical fiber and a system for measuring the nonlinearity coefficient of an optical fiber, especially in the process of manufacturing optical fiber cores.

Methods of measuring parameters of telecommunication optical fibers are described in the book by Krzysztof Perlicki titled "Measurements in telecommunication optical systems" (Wydawnictwa Komunikacji i 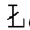 aczności, Warsaw 2002). The book titled "Oscilloscopic measurements" (Wydawnictwa Naukowo-Techniczne, Warsaw 2007) by Jerzy Rydzewski describes methods of measuring parameters of transmission lines with use of digital oscilloscopes. In the book titled "Nonlinear fiber optics" (Wydawnictwa Naukowo-Techniczne, Warsaw 2001) its authors, Miroslaw Karpisz and Ewa Weinert-Raczka, describe in detail propagation parameters of light signals in optical fibers.

The specification of the Polish patent description PL 153768 B1 describes a method and a system for measuring very small values of the nonlinear distortion coefficient. The specification of the European patent application EP 2230782 A1 discloses monitoring of non-linear distortions in a fiber-optic transmission system consisting in the testing with a light signal having an appropriately selected amplitude and duration, the measurement value lying in the complex plane. A method and a device for easily and rapidly measuring nonlinear refractive index of optical fiber disclosed in the American patent description US 6909496 B2 are characterised in that a section of the tested optical fiber is placed between a source of a modulated light signal having an appropriately varied amplitude and an optical receiver of the measuring section.

The essence of a method of measuring the nonlinearity coefficient of an optical fiber according to the invention consists in cutting off a length of a tested optical fiber as determined according to the formula: L_{SWT} = T_{SWT}(c/n_{SWT}), where T_{SWT} is a time interval between two subsequent pulses of a light signal T_{REP} generated by a semiconductor laser, n_{SWT} is a refractive index of the core of the tested optical fiber, and c is the speed of light in vacuum. Then, one end of the tested optical fiber length is connected to a third gate of a directional coupler and the other end of the tested optical fiber length is connected, via a second polarisation controller, to a second gate of the directional coupler. Next, a semiconductor laser, controllable by means of electrical signals from a control unit, emits pulse light signals T_{REP} at equal time intervals T_{SWT}. Then, polarisation states of the pulse light signals fed into a first gate and into a second gate are corrected, respectively, by a first polarisation controller and a second polarisation controller. The light signals reach a photoreceiver, where they are transformed into an electrical signal. Next, an oscilloscope is used to measure the amplitude and phase of the electrical signal, and the phase measurement is carried out with use of a signal received and originating from the control unit. The phase measurement is carried out at the halfway point of the rising edge of electrical signal pulse. Next, a measuring unit measures the numerical value of dispersion and attenuation of the tested optical fiber length as well as amplitudes and phases of the light signals. Electrical signals containing the measurement results are recorded in a recording unit, from where the electrical signals containing the measurement results are selectively transmitted to a computing unit. The computing unit, on the basis of the amplitude and phase measurement results taken from the measuring unit, determines the real part and the imaginary part of the signal of each of the subsequently received light pulses, which are displayed on the oscilloscope screen as the Archimedean spiral. The computing unit determines the length of the Archimedean spiral. Next, the computing unit determines the numerical value of the nonlinearity coefficient of the tested optical fiber length according to the formula: γ_{SWT} = mL_{SPIR}, where m is a coefficient dependent on the duration of the light signal pulse, on the peak optical power of the light signal pulses whose numerical value is equal to the squared amplitude of the light signal measured by the oscilloscope, on the length of the tested optical fiber, and on the numerical value of its dispersion and attenuation.

The essence of a system for measuring the nonlinearity coefficient of an optical fiber according to the invention consists in that a control unit is connected to an oscilloscope and a semiconductor laser. The semiconductor laser is connected, via a first length of optical fiber, to a first polarisation controller, whose output is connected to a first gate of a directional coupler, whereas output of a second polarisation controller is connected to a second gate of the directional coupler. A third gate of the directional coupler is connected, via the tested optical fiber, to input of the second polarisation controller, whereas a fourth gate of the directional coupler is connected, via a second length of optical fiber, to input of a photoreceiver. A first output of the photoreceiver is connected, via the oscilloscope, to a computing unit, whereas a second output of the photoreceiver is connected, via serially coupled measuring unit and recording unit, to the computing unit, to which a second keyboard is attached.

The basic advantages of using the method and system for measuring the nonlinearity coefficient of an optical fiber according to the invention, as compared to the prior art, comprise the shortening of the duration of the measuring procedure ensuring the expected level of trust in the obtained result of measuring the nonlinearity coefficient of an optical fiber by means of selecting individual steps and the order of implementing them in the said measuring procedure and by selecting an optimal number of optical devices and their interconnection structure at the measuring site.

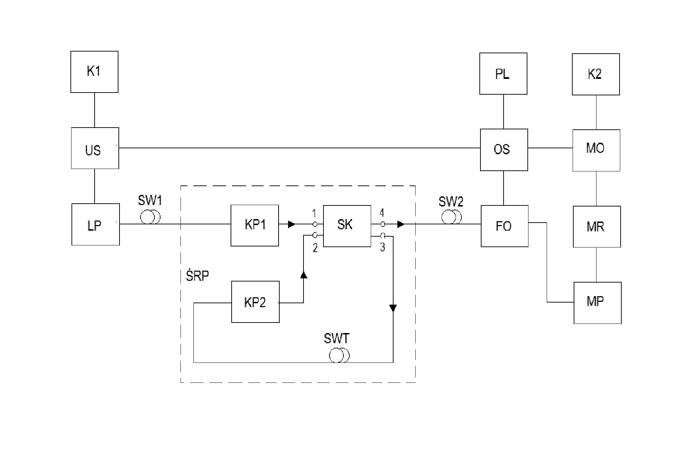

An example embodiment of the system for measuring the nonlinearity coefficient of an optical fiber according to the invention is shown in the figure as a block diagram.

In an example embodiment of the method of measuring the nonlinearity coefficient of an optical fiber according to the invention a length of a tested optical fiber SWT is cut off, the length being determined according to the formula: L_{SWT} = T_{SWT} (c/n_{SWT}), where T_{SWT} is a time interval between two subsequent pulses of a light signal T_{REP} generated by a semiconductor laser LP, n_{SWT} is a refractive index of the core of the tested optical fiber SWT, and c is the speed of light in vacuum. Data about the length of the tested optical fiber SWT and its technical parameters as well as parameters of pulse light signals are entered using a first keyboard K1 to nonvolatile memory of a control unit US. Then, one end of the tested optical fiber length SWT is connected to a third gate 3 of a directional coupler SK and the other end of the tested optical fiber length SWT is connected, via a second polarisation controller KP2, to a second gate 2 of the directional coupler SK.

Next, a semiconductor laser LP, controllable by means of electrical signals from the control unit US, emits pulse light signals T_{REP} at equal time intervals T_{SWT}. Polarisation states of the pulse light signals fed into a first gate 1 and into a second gate 2 are corrected, respectively, by a first polarisation controller KP1 and a second polarisation controller KP2. The light signals reach a photoreceiver FO, where they are transformed into an electrical signal. Next, an oscilloscope OS is used to measure the amplitude and phase of the electrical signal, and the phase measurement is carried out with use of a signal received and originating from the control unit US. The phase measurement is carried out at the halfway point of the rising edge of electrical signal pulse.

A measuring unit MP measures the numerical value of dispersion and attenuation of the tested optical fiber length SWT as well as amplitudes and phases of the light signals, and electrical signals containing these measurement results are recorded in a recording unit MR. The electrical signals containing these measurement results are selectively transmitted from the recording unit MR to a computing unit MO. A second keyboard K2 is used to enter to the computing unit MO the electrical signals, which are used to determine the order of processing of the electrical signals coming from the oscilloscope OS.

The computing unit MO, on the basis of the electrical signals carrying amplitude and phase measurement results taken from the measuring unit MP, determines the real part and the imaginary part of the signal of each of the subsequently received light pulses, which are displayed on the oscilloscope OS screen as the Archimedean spiral. The computing unit MO determines the length of the Archimedean spiral L_{SPIR}. Next, the computing unit MO determines the numerical value of the nonlinearity coefficient of the tested optical fiber according to the formula: γ_{SWT} = mL_{SPIR}, where m is a coefficient dependent on the duration of the light signal pulse T_{REP}, on the peak optical power of the light signal pulses whose numerical value is equal to the squared amplitude of the light signal measured by the oscilloscope OS, on the length of the tested optical fiber L_{SWT}, and on the numerical value of its dispersion and attenuation.

In an example embodiment of the system for measuring the nonlinearity coefficient of an optical fiber according to the invention a control unit US is connected to a keyboard K1, a semiconductor laser LP and an oscilloscope OS, to which a plotter PL is connected. The semiconductor laser LP is connected, via a first length of optical fiber SW1, to a first polarisation controller KP1. Output of the first polarisation controller KP1 is connected to a first gate 1 of a directional coupler SK, and output of a second polarisation controller KP2 is connected to a second gate 2 of the directional coupler SK. A third gate 3 of the directional coupler SK is connected, via a tested optical fiber SWT, to input of the second polarisation controller KP2. A fourth gate 4 of the directional coupler SK is connected, via a second length of optical fiber SW2, to input of a photoreceiver FO. A first output of the photoreceiver FO is connected, via the oscilloscope OS, to a computing unit MO, while a second output of the photoreceiver FO is connected, via serially coupled measuring unit MP and recording unit MR, to the computing unit MO, to which a second keyboard K2 is attached.

The directional coupler SK, with the output of the first polarisation controller KP1 connected to its first gate 1 and with the output of the second polarisation controller KP2 connected to its second gate 2, and the input of the second polarisation controller KP2 being connected, via the tested optical fiber SWT, to the third gate 3 of the directional coupler SK, is an optical fiber ring resonator ŚRP having a clearly determined optical fiber length and a numerical value of its dispersion and attenuation.

While the method and the system for measuring the nonlinearity coefficient of an optical fiber according to the invention are defined by two patent claims, presented as a specific example embodiment in the description of the invention and portrayed in the drawing, one skilled in the field of methods and systems for measuring the nonlinearity coefficient of optical fibers will find it obvious that the data about the method and the system for measuring the nonlinearity coefficient contained therein cannot be interpreted as a limitation of the inventive idea to those data only.

## Claims

1. A method of measuring the nonlinearity coefficient of an optical fiber consisting in emitting pulse light signals from a semiconductor laser, controlling their polarisation, determining the length of a tested optical fiber, measuring a numerical value of its dispersion and attenuation, **characterised in that** a length of a tested optical fiber (SWT) is cut off, the length being determined according to the formula: L_{SWT} = T_{SWT}(c/n_{SWT}), where (T_{SWT}) is a time interval between two subsequent pulses of a light signal (T_{REP}) generated by a semiconductor laser (LP), n_{SWT} is a refractive index of the core of the tested optical fiber length (SWT), and c is the speed of light in vacuum, and then one end of the tested optical fiber length (SWT) is connected to a third gate (3) of a directional coupler (SK) and the other end of the tested optical fiber length (SWT) is connected, via a second polarisation controller (KP2), to a second gate (2) of the directional coupler (SK), and then the semiconductor laser (LP), controllable by means of electrical signals from a control unit (US), emits pulse light signals (T_{REP}) at equal time intervals (T_{SWT}), then polarisation states of the pulse light signals fed into a first gate (1) and into a second gate (2) are corrected, respectively, by a first polarisation controller (KP1) and a second polarisation controller (KP2), and the light signals reach a photoreceiver (FO), in which they are transformed into an electrical signal, and then an oscilloscope (OS) is used to measure the amplitude and phase of the electrical signal, the phase measurement being carried out with use of a signal received and originating from the control unit (US), and the phase measurement is carried out at the halfway point of the rising edge of electrical signal pulse, and then a measuring unit (MP) measures the numerical value of dispersion and attenuation of the tested optical fiber length (SWT) as well as amplitudes and phases of the light signals, electrical signals containing these measurement results being recorded in a recording unit (MR), from which the electrical signals containing these measurement results are selectively transmitted to a computing unit (MO), which, on the basis of the amplitude and phase measurement results taken from the measuring unit (MP), determines the real part and the imaginary part of the signal of each of the subsequently received light pulses, which are displayed on the oscilloscope (OS) screen as the Archimedean spiral, and the computing unit (MO) determines the length of the Archimedean spiral L_{SPIR}, and then the computing unit (MO) determines the numerical value of the nonlinearity coefficient of the tested optical fiber length according to the formula: γ_{SWT} = mL_{SPIR}, where m is a coefficient dependent on the duration of the light signal pulse (T_{REP}), on the peak optical power of the light signal pulses whose numerical value is equal to the squared amplitude of the light signal measured by the oscilloscope (OS), on the length of the tested optical fiber (L_{SWT}), and on the numerical value of its dispersion and attenuation.

2. A system for measuring the nonlinearity coefficient of an optical fiber comprising a semiconductor laser, a control unit with a keyboard, a directional coupler, polarisation controllers, a photoreceiver, a computing unit, **characterised in that** a control unit (US) is connected to an oscilloscope (OS) and a semiconductor laser (LP), which is connected, via a first length of optical fiber (SW1), to a first polarisation controller (KP1), whose output is connected to a first gate (1) of a directional coupler (SK), while output of a second polarisation controller (KP2) is connected to a second gate (2) of the directional coupler (SK), and a third gate (3) of the directional coupler (SK) is connected, via a tested optical fiber (SWT), to input of the second polarisation controller (KP2), while a fourth gate (4) of the directional coupler (SK) is connected, via a second length of optical fiber (SW2), to input of a photoreceiver (FO), whose first output is connected, via the oscilloscope (OS), to a computing unit (MO), and a second output of the photoreceiver (FO) is connected, via serially coupled measuring unit (MP) and recording unit (MR), to the computing unit (MO), to which a second keyboard (K2) is attached
